# EUROPEAN PATENT SPECIFICATION

(11) **EP 3 494 069 B1**
(45) Date of publication and mention of the grant of the patent: **09.06.2021**
(21) Application number: 17755567.9
(22) Date of filing: 25.07.2017
(51) Int. Cl.: B65D 85/804

(54) **CAPSULE FOR THE PREPARATION OF INFUSION AND SOLUBLE BEVERAGES**
KAPSEL ZUR ZUBEREITUNG VON GETRÄNKEN
CAPSULE POUR LA PREPARATION DE BOISSONS

(30) Priority: 04.08.2016 IT 201600082488
(43) Date of publication of application: 12.06.2019
(73) Proprietor: Bisio Progetti S.p.a., 15121 Alessandria (IT)
(72) Inventor: BISIO, Luigi, 15121 Alessandria (IT)
(74) Representative: Gualeni, Nadia
(86) International application number: PCT/IB2017/054499
(87) International publication number: WO 2018/025120

(56) References cited:
- WO-A1-02/080744
- WO-A1-2015/121881
- WO-A1-2015/121882

## Description

An object of the present invention is a capsule for the preparation of infused or soluble beverages.

In particular, the object of the present invention is a capsule for the packaging of concentrated products (for example in the form of powder, granules, leaves) in predetermined and single-use dosage forms for the impromptu preparation of beverages (such as tea, coffee, herbal teas, milk, chocolate, etc.) by introducing a pressurized fluid (usually hot water) into the capsule itself.

In the field of capsules or pods for coffee or other infusions, the use automatic or semi-automatic machines equipped with a dispensing unit adapted to produce an infusion by means of passing hot water under pressure through the capsule containing the extract to be infused or dissolved is known.

The common operating principle of such machines involves the perforation of the cover used to close the capsule to allow the introduction of a flow of hot water under pressure by means of the infuser assembly. Once the infusion of the extract contained within the capsule is achieved, the infused beverage flows out of the capsule and is directed by the machine into the cup or the final container.

The capsules are provided with a sealing film, usually made of aluminum, positioned at the bottom of the capsule on a base provided with one or more points or cutting or perforating profiles. Increasing the pressure inside the capsule causes the pressurized fluid to push the aluminum layer against the points on the base to cause perforation. Once an opening has been created in the sealing film layer, the infused beverage may flow out from a suitable opening at the base of the capsule itself.

Examples of said known capsules are disclosed in documents WO 2015/121882 A1 and WO 2015/121881 A1.

These capsules are quite complex from a construction point of view, especially with regard to making the points and the cutting and perforating profiles on the base. Therefore, the known capsules are quite expensive especially in terms of manufacturing the molds thereof.

The object of the present invention is to provide a capsule for the preparation of infused or soluble beverages that solves the problems of the known art.

In particular, the object of the present invention is to provide a capsule for the preparation of infused or soluble beverages that is simpler and more economical than the known capsules, while achieving similar performance in terms of the quality of the infused beverage.

Such object is achieved by a capsule wherein the opening for the outflow of the infused beverage occurs as a result of the detachment of the sealing disc placed inside the capsule due to the traction means actuated by the increase in pressure of the fluid inside the capsule itself, thus avoiding the use of any cutting or perforation means as in the known capsules.

Furthermore, the object of the present invention is to ensure the detachment of the sealing disc in order to ensure the opening of the capsule.

It is yet another object of the present invention to provide an effective seal for the capsule to ensure the gas tightness.

This object is achieved by a capsule for the preparation of infused or soluble beverages according to claim 1, and a method for preparing an infused beverage according to claim 14. The dependent claims describe preferred embodiments of the invention.

The features and advantages of a capsule for the preparation of infused or soluble beverages according to the present invention will be apparent from the description given below, provided by way of non-limiting example, in accordance with the accompanying figures, wherein:
- figures 1 and 2 show a perspective top view of a cup for a capsule in accordance with the present invention respectively in a first and a second example of embodiment;
- figures 3 and 4 show a top view of the inside of the capsule in accordance with the present invention provided with a sealing disc, respectively, in a first and a second example of embodiment;
- figures 5 and 6 show a sectional view of a capsule provided with the cup of figure 2 and the sealing disc of figure 3, respectively before and after the infusion, in a variant of embodiment;
- figures 7 and 8 show a sectional view of a capsule provided with the cup of figure 1 and the sealing disc of figure 3, respectively before and after the infusion, in a variant of embodiment;
- figures 9 and 10 show a sectional view of a capsule provided with the cup of figure 1 and the sealing disc of figure 4, respectively before and after the infusion, in a variant of embodiment;
- figures 11 and 12 show a sectional view of a capsule provided with the cup of figure 1 and the sealing disc of figure 3, respectively before and after the infusion, in a further variant of embodiment;
- figures 13A and 13B show a detail of the bottom of the capsule of figure 5 before and after infusion;
- figures 14A and 14B show a detail of the bottom of the capsule of figure 11 before and after infusion.

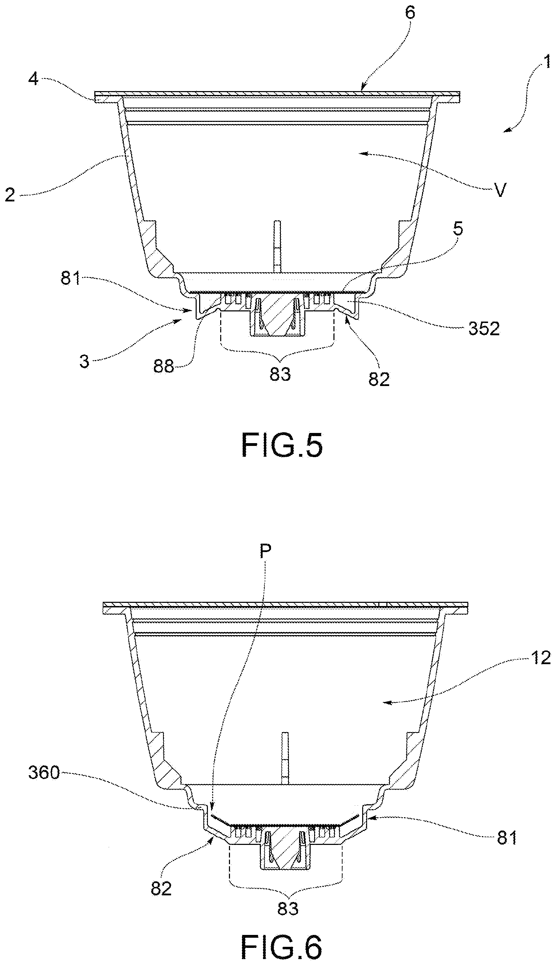

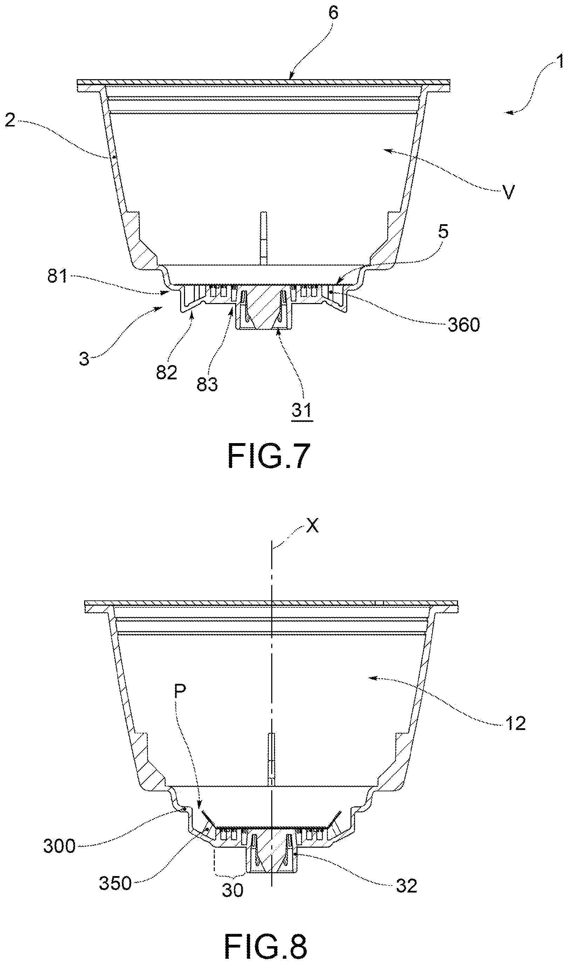

With reference to the appended figures, and in particular figures 5 to 12, a capsule for the preparation of infused or soluble beverages is shown, indicated at the reference number 1.

Capsule 1 comprises a body or cup 2 suitable for defining an internal volume V for containing at least one substance to be infused or dissolved, typically in powder or granular form.

The cup 2 is provided, on the one side, with a bottom 3 and, on the opposite side, with an inlet opening 21 defined by a protruding edge 4 extending outward.

The capsule 1 comprises a cover 6 fixed by bonding or welding to the edge 4 adapted to seal the cup 2 at the top.

The cup 2 is provided on the bottom 3 with an outlet opening 31, defined by a nozzle 32, adapted to allow the outflow of the infused beverage.

The cup 2 is provided internally at the bottom 3 with a base 33 provided with a plurality of reliefs 310, 320, 330, 340, 350, 360 projecting vertically with respect to the base 33 itself.

The top surface of the reliefs 310, 320, 330, 340, 350, 360 is substantially flat and devoid of cutting, puncture or tearing elements. Also, the reliefs 310, 320, 330, 340, 350, 360 have beveled and rounded edges.

Preferably, the reliefs 310, 320, 330, 340, 350, 360 all have substantially the same vertical extension.

A sealing disc 5 is fixed, by bonding or welding, on the upper surface of at least some of the reliefs 310, 320, 330, 340, 360.

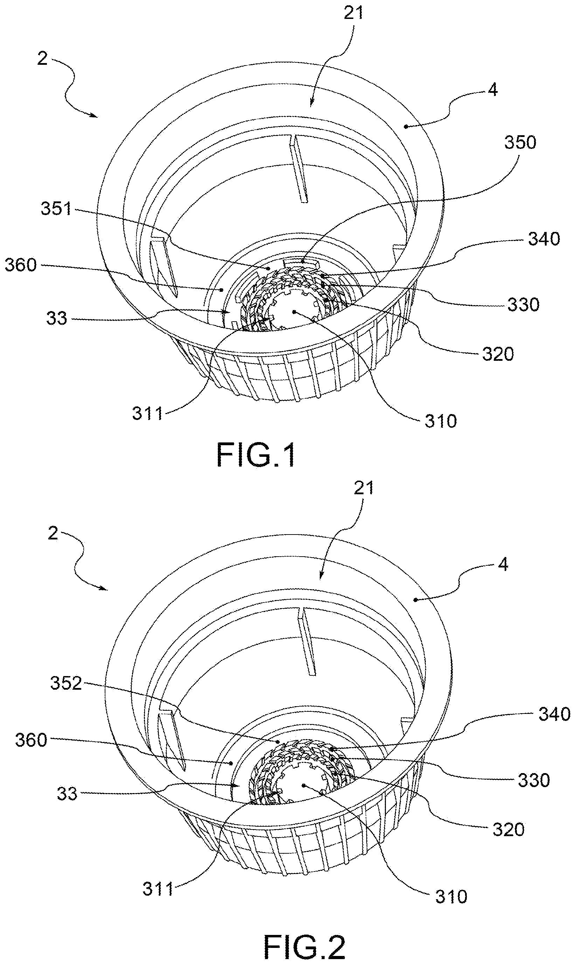

As shown in figures 1 and 2, the base 33 comprises a central portion 310 defined by a first relief covering the output opening 31 of the nozzle 32. The central portion 310 is provided with at least one connection opening 311 between the inside of the cup 2 and the outlet opening 31, to allow the flow of the infused beverage out of the capsule 1. Preferably, the central portion 310 comprises a plurality of connection openings 311.

The base 33 comprises a labyrinth 30 defined by at least one further relief 320, 330, 340. The labyrinth 30 is of a substantially circular shape and disposed concentrically with respect to the nozzle 32 (and the central portion 310).

Each relief 320, 330, 340 of the labyrinth 30 is provided with a plurality of grooves, preferably diagonal, provided on the upper surface of each relief of the labyrinth, adapted to allow the infused beverage to flow out of the capsule 1.

In the example of embodiment of figures 1 and 2, the labyrinth 30 is defined by a first labyrinth portion 320, a second labyrinth portion 330, and a third labyrinth portion 340 arranged concentrically with respect to the nozzle 32.

The base 33 comprises an outer edge 360, defined by a further relief, whereon a sealing disc 5 is fixed by bonding or welding.

In an example of embodiment shown in figure 2, the base 33 comprises a collection compartment 352 for the infused beverage to flow out of the capsule 1. The collection compartment 352, defined between the labyrinth 30 and the edge 360, is an annular groove recessed with respect to the labyrinth 30 and the edge 360. Also advantageously, the collection compartment 352 defines a space to accommodate, without obstructing it, the vertical displacement of the sealing disc 5 when pulled by the traction means actuated by the pressure of the fluid inside the capsule 1.

In a different example of embodiment shown in figure 1, the base 33 also comprises a plurality of sectors 350, defined by further reliefs, arranged between the labyrinth 30 and the edge 360, within the collection compartment 352.

Circular sectors 350, substantially in the shape of a circumferential arc, are arranged circumferentially homogeneously with respect to the nozzle 32.

Advantageously, the sectors 350 are beveled and devoid of cutting, puncture or tearing elements. A sealing disc 5 rests on the upper surface of the sectors 350.

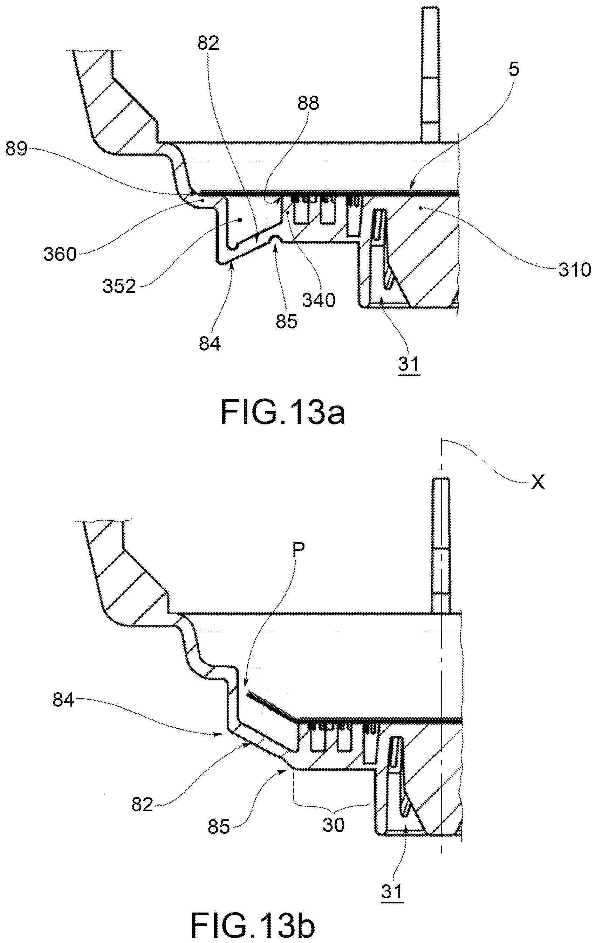

In one example of embodiment (shown in figures 1, 2, 7, 8, 9, 10, 13), the sectors 350 have a substantially flat top surface.

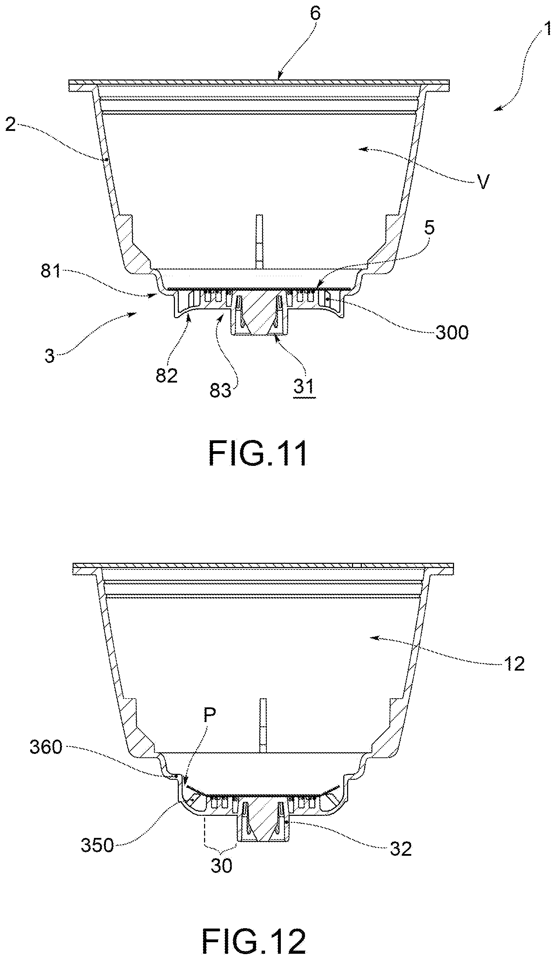

In a different example of embodiment (shown in figures 11, 12, 14), the sectors 350 have an upper surface provided with an appendage 359 (i.e. a hook) able to engage the disc 5 and pull it in the opening movement of the traction means. Advantageously, the appendage 359 is beveled and devoid of cutting, puncture or tearing portions.

In a variant of embodiment, the sectors 350 have substantially the same vertical extension as the other reliefs 310, 320, 330, 340 that form the base 33. In a different variant of embodiment, the sectors 350 have an upper vertical extension, i.e. they are raised with respect to the other reliefs 310, 320, 330, 340 that form the base 33.

The sectors 350 define a plurality of compartments 351, or compartments or spaces, which allow the infused beverage to flow out of the capsule 1. In particular, a compartment 351 is defined between a pair of adjacent sectors 350. Moreover, the presence of the sector 350 allows the disc 5 to be supported in such a way as to ensure the passage P has an adequate width for the infused beverage to flow out correctly and easily.

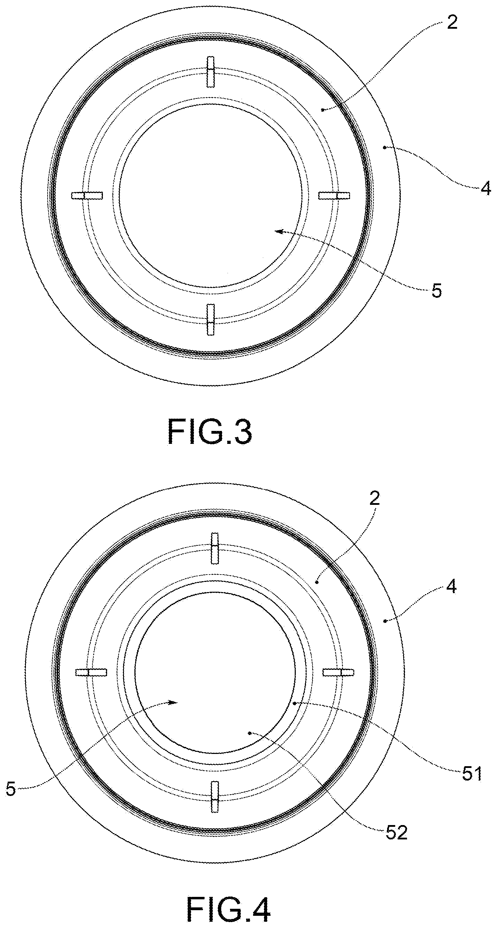

As shown in figures 3 to 14, the capsule 1 comprises a sealing disc 5, fixed inside the cup 2 at the bottom 3, suitable to seal the cup 2 inferiorly. The disc 5 is positioned between the internal volume V and the reliefs 310, 320, 330, 340, 350, 360.

The capsule 1 is thus provided with a closed chamber 12, defined at the top by the cover 6 and at the bottom by the disc 5, within which the substance to be infused or dissolved is contained.

The presence of a hermetically sealed chamber 12 is important for good maintenance and preservation of the substance: the hermetically sealed chamber 12 allows the organoleptic properties of the substance to be infused or dissolved to be maintained over time and ensures an infused beverage of good quality. An essential element for obtaining a hermetically sealed chamber 12 is the proper gas tightness of the system for fixing the sealing disc 5 within the capsule 1.

In one example of embodiment (shown in figures 3, 5-8, 11-14), the sealing disk 5 is constituted by a single discoid portion, i.e., a single piece.

In such example, the disc 5 is welded or bonded to the base 33 of the cup 2, in particular on the outer edge 360, in a manner at least partially releasable. The disc 5 is therefore temporarily fixed to the outer edge 360 by using a low-adhesion or weak lacquer 89 or bonded using a low-adhesion or weak adhesive so as to allow it to detach from the outer edge 360 due to the traction exerted by the traction means actuated by the increase in pressure inside the capsule 1.

Preferably, the lacquer 89 ensures a detachment force lower than that of standard lacquers.

In a different example of embodiment (shown in figures 4,9,10), the sealing disc 5 is composed of an outer portion 51 and an inner portion 52, joined together by welding or bonding in a manner which is at least partially releasable.

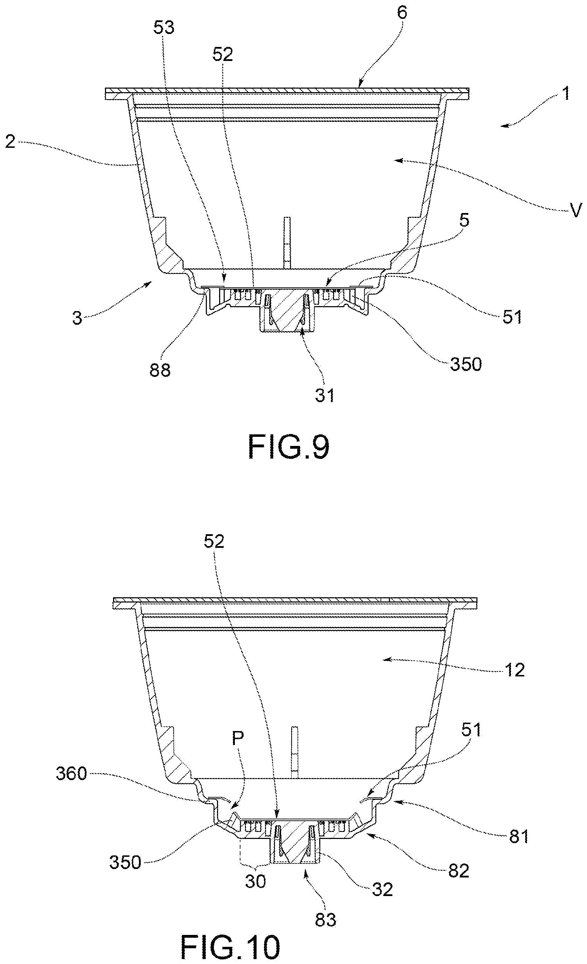

In such example, the outer portion 51 is a ring surrounding the inner portion 52 in the form of a disc, joined together by welding or bonding in an at least partially releasable manner. As shown in figure 9, the inner edge of the ring that forms the outer portion 51 overlaps the outer edge of the disc that forms the inner portion 52. In the overlap area 53, the two outer 51 and inner 52 portions that form the sealing disc 5 are joined in an at least partially releasable manner, i.e. by the use of a low-adhesion or weak lacquer 89, or bonded by means of a low-adhesion or weak adhesive. Such a weak lacquer permits the disengagement (separation or detachment) of the two outer 51 and inner 52 portions as a result of the traction exerted by the traction means actuated by the increase in pressure inside the capsule 1.

Preferably, the weak lacquer ensures a detachment force lower than that of standard lacquers.

Preferably, the overlap area 53 between the outer 51 and inner 52 portions comprising the sealing disk 5 is positioned at a compartment 351,352 of the base 33. In the case of the cup of figure 2, the overlap area 53 is positioned at the collection compartment 352; in the cup of figure 1, the overlap area 53 is positioned at the compartment 351 between two adjacent sectors 350.

In the capsule 1, the sealing disc 5 is permanently welded or bonded, at least partially, to the base 33 of the cup 2, i.e. using a standard lacquer 88. Such standard lacquer 88 prevents the detachment or separation of the sealing disc 5 from the base 33, ensuring an effective closure of the capsule so as to ensure the gas tightness.

In the example of embodiment with a single-piece sealing disc (figure 3), the disc 5 is fixed permanently on the labyrinth 30, or at least on the outermost relief 340 formed by the labyrinth 30.

In the example of embodiment with the composite disc (figure 4), the outer edge of the ring making the outer portion 51 is fixed permanently on the outer edge 360 of the base 33, and the inner portion 52 is permanently fixed to the labyrinth 30, or at least on the outermost relief 340 formed by the labyrinth 30.

Preferably, the disc 5 is permanently bonded or welded also to the central portion 310.

In the example of embodiment with sectors 350 (figure 1), the disc 5 is only supported without being fixed (in neither a weak nor permanent manner) over the sectors 350.

The capsule 1 for the preparation of infused or soluble beverages further comprises traction means of the sealing disc 5, actuated by the increase of the pressure inside the capsule, and particularly within the closed chamber 12. The traction means are adapted to pull the disc 5 to cause the weak lacquer to collapse so as to cause the separation of the disc 5 from the base 33, or the separation between the outer 51 and inner 52 portions of the disc 5 in such a way as to allow the opening of a passage P for the infused liquid to flow out.

The traction means are formed at the bottom 3 of the capsule.

As shown in figure 5, the bottom 3 of the capsule 1 comprises:
- a substantially rigid perimetral edge 81;
- a central portion 83 on which the (pressure) force exerted by the pressurized liquid inside of the chamber 12 acts;
- an intermediate portion 82, collapsible towards the outside of the cup 2 under the action of the pressure exerted by the pressurized fluid on the central portion 83 and/or on this intermediate portion 82.

The traction means thus comprise the perimeter edge 81, the central portion 83, and the intermediate portion 82 which is collapsible externally.

It is noted that:
- the perimetral edge 81 corresponds, at least partially, to an outer edge 360 of the inner base 33;
- the central portion 83 corresponds, at least partially, to the labyrinth 30 and to the central portion 310 of the inner base 33;
- the intermediate portion 82 corresponds, at least partially, to a compartment 351,352 of the base 33.

The intermediate portion 82 is interposed between the peripheral edge 81 and the central portion 83.

The intermediate portion 82 is peripherally connected to the peripheral edge 81 by the interposition of at least one first fold line 84 and is connected to the central portion 83 by the interposition of at least one second fold line 85.

Preferably, the central portion 83 is of a circular shape coaxial to the axis of longitudinal symmetry X of the cup 2. In addition, the pressure force is exerted from the inside of the capsule 1 (and in particular from the inside of the chamber 12) on the central portion 83 along a direction substantially parallel to the axis of longitudinal symmetry X.

Starting from the operative closure position of the capsule 1 (shown in particular in figures 5, 7, 9, 11, 13a, 14a) by applying a pressure force (by means of the pressurized liquid injected by the beverage preparation machine) on the central portion 83 (and in particular at least on the labyrinth 30 and on the central portion 310 of the inner base 33), the intermediate portion 82 is forced to collapse toward the outside of the volume of the cup 2 by rotating, relative to the perimetric edge 81 and the central portion 83 itself, respectively around the first fold line 84 and the second fold line 85.

The collapse of the intermediate portion 82 toward the outside causes an axial displacement of the central portion 83 of the bottom 3 toward the outside of the volume of the cup 2, and with it the disc 5 (or at least one portion thereof) fixed permanently at the central portion 83, that is, at least at the labyrinth 30.

The axial displacement of the disc 5 toward the outside of the volume of the cup 2 results in the yield of the weak lacquer (at the outer edge 360 or the overlap area 53) and the opening of a passage P for the outflow of the infused liquid consequently brings the capsule 1 into its operative dispensing position, as shown in figures 6, 8, 10, 12, 13b, 14b.

In the variant of embodiment of figures 5, 7, 9, 13, the traction means are snap-on. In such example, the capsule 1 is bistable, i.e. it maintains the operative closure position until the traction means are actuated by the pressure increase inside the closed chamber 12, and, once open, it maintains the operative dispensing position.

In such example of embodiment, the fold lines 84, 85 are made as lines of narrowing of the material, or as thinning on the wall or the grooves of the wall. Furthermore, the intermediate portion 82 is rigid to allow the snap-opening.

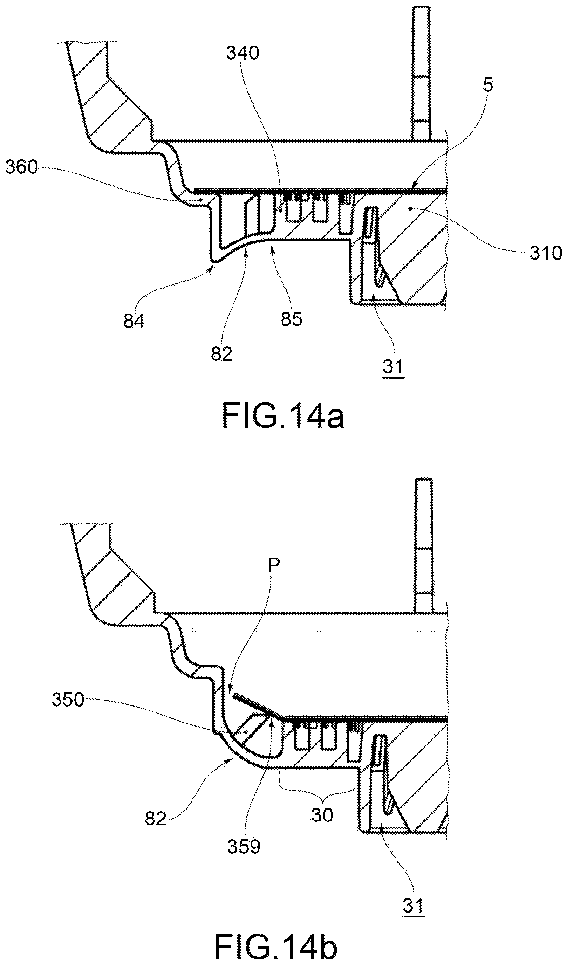

In the variant of embodiment of figures 9 and 14, the traction means are elastic. In such example, the capsule 1 is monostable, that is, it is stable only in the operative closure position: as a result of the increase in pressure inside the closed chamber 12, the traction means are actuated and the capsule opens and reaches the operative dispensing position; once the pressure inside the closed chamber 12 has been stopped or reduced, the traction means are deactivated and the capsule 1 returns to the operative closure position.

In fact, with the lack (or decrease) of the pressure force of the liquid in the chamber 12, the intermediate portion 82 re-collapses within the volume of the cup 2, causing an axial displacement inwardly of the central portion 83 and with it the disc 5. The upward movement of the disc 5 towards its original position causes the at least partial closure of the passage P for the outflow of the infused fluid and a consequent reduction of dripping after dispensing. Also advantageously, the presence of the sector 350, which helps to push the disk 5 back to its initial closed position, contributes to effectively closing the passage P.

In such example of embodiment, the intermediate portion 82 is flexible or thin, and acts as a diaphragm to allow the return to the closed position. In particular, the intermediate portion 82 is flexible and concave towards the outside of the cup 2 in an operative closure position and convex towards the outside of the cup 2 in an operative dispensing position.

Preferably, the disc 5 is a durable aluminum film which does not break or tear due to the increase in pressure within the capsule 1.

Preferably, the disc 5 is a film made of aluminum or a plastic/aluminum composite or plastic material, either single- or multilayer.

Preferably, the disc 5 is a film with a thickness between 30µ and 80µ.

In a preferred example, the disc 5 is a plastic film with a thickness between 50µ and 80µ, preferably between 60µ and 70µ.

The cup 2 is made of plastic material, preferably injection molded or thermoformed. For example, the cup is made of polypropylene (PP), or polyethylene (PE), or polybutylene terephthalate (PBT), polyethylene terephthalate (PET).

A capsule according to the present invention may be used for the packaging of concentrated products (in the form of powder or granules or leaves) in predetermined and single-use doses, for the impromptu preparation of beverages such as leaf or soluble tea, powdered or instant coffee, herbal teas, milk, chocolate, or other dehydrated and soluble products.

The capsule 1, in its various variants of embodiment, may be used for the impromptu preparation of beverages (such as tea, coffee, herbal teas, milk, chocolate, etc.) by means of automatic or semi-automatic machines equipped with a dispensing unit adapted to produce an infusion via the passage of pressurized hot water through the capsule 1.

Thus, in use, the capsule 1 is inserted into a suitable seat provided in the machine. The machine perforates the cover 6, positioned to seal the capsule 1, and injects a pressurized fluid (typically hot water) into the chamber 12, 12' wherein the substance 11 is contained.

The presence of the disc 5 to seal the bottom 3 of the capsule 1 allows the pressurized fluid to remain for a certain amount of time in contact with the substance 11 to be infused or dissolved to ensure an optimal infused beverage is obtained. The pressure exerted by the fluid inside the capsule 1 rises to a certain threshold level or opening pressure (for example between 4 and 8 bar) which pushes on the traction means until it actuates them to cause the capsule 1 to open. At this point, the infused beverage may flow out through the outlet opening 31 and be directed through the nozzle 32 into the cup or the final container.

In particular, the opening of the capsule 1 is caused by the at least partial disengagement of the disc 5 from the base 33, or by the at least partial disengagement between the portions 51, 52 comprising the disc 5 itself.

As a result of the increase in pressure inside the capsule 1, the traction means are actuated, i.e. pushed in the outer direction with respect to the cup 2. The actuation of the traction means causes an axial displacement of the base 33 and with it an axial displacement of the disc 5 or at least one of its parts (inner portion 52). Such axial displacement (in the direction outside of the cup 2) causes a yield of the weak lacquer which causes the sealing effect previously ensured by the sealing disc 5 to fail. In fact, the disengagement (i.e. detachment or separation) of the disc 5 from the outer edge 360 of the base, or the disengagement between the portions 51,52 that comprise the disc 5, causes the opening of a passage P for the outflow of the infused liquid.

The disengagement occurs only at the weak welding, whereas no disengagement occurs at the permanent welding.

Advantageously, as the disc 5 simply rests on the upper surface of the sectors 350 without being welded or bonded to them, it may slide freely during the axial displacement generated by the traction of the traction means actuated by the increase in pressure within the capsule 1.

In the capsule 1 according to the present invention, the outlet passage P for the infused beverage between the chamber 12 and the nozzle 32 is achieved by means of an axial displacement of the sealing disc 5 by the traction means without the need for perforation or tearing means of the disc, such as cutting points or profiles.

An object of the present invention is therefore a capsule 1 for the preparation of infused or soluble beverages, comprising:
- a cup 2 suitable to define an inner volume V for the containment of at least one substance to be infused or dissolved, said cup being closed on top by a cover 6, said cup being equipped with a bottom 3 provided with an opening 31 for the outflow of the infused beverage, and a base 33 provided with reliefs 310, 320, 330, 340, 350, 360 devoid of cutting or puncture elements;
- a disc 5 placed inside the cup 2, fixed at least partially on the reliefs 310, 320, 330, 340, 350, 360, and suitable to seal the capsule 1 inferiorly;
- traction means of the sealing disc 5, actuated by the increase in the pressure within the capsule, wherein the opening of the capsule 1 for the outflow of the infused beverage occurs following the displacement of the disc 5 by the traction means 8, a displacement that allows the opening of a passage P for the outflow of the infused liquid without causing any rupture or tear in the disc 5 itself.

Furthermore, the disc 5 sealingly closes the chamber 12 through the use of a weak lacquer, and wherein the traction means are adapted to pull the disc 5 until causing the yield of the weak lacquer so as to reduce the sealing effect previously provided by the disc 5.

An object of the present invention is also a method for preparing an infused beverage by means of a capsule 1 in accordance with the present invention, wherein the opening for the outflow of the infused beverage is obtained by means of the axial displacement of the disc 5 due to the traction means actuated by pressure, a displacement allowing the opening of a passage P for the outflow of the infused liquid without causing any rupture or tearing of the disc 5 itself.

Innovatively, a capsule for the preparation of infused or soluble beverages according to the present invention is simple in construction and in any case may ensure high performance in terms of the quality of the infused beverage. In fact, in such capsule the opening for the outflow of the infused beverage occurs as a result of the displacement of the sealing disc covering the bottom due to the activation of the traction means by the pressure exerted by the fluid inside the capsule, thus avoiding the use of any cutting or perforation means.

Also advantageously, the traction means are able to exert a high traction force on the disc, ensuring the safety of the yielding of the weak lacquer that leads to the opening of a passage for the outflow of the infused fluid. Therefore, the sealing disc may be fixed to the base in such a way as to ensure gas tightness.

Advantageously, therefore, a capsule thus made allows the organoleptic properties of the substance contained within to be maintained over time, thus ensuring an infused beverage of an excellent quality.

It is clear that a person skilled in the art may make modifications to the capsule for the preparation of infused or soluble beverage described above, all of which are within the scope of protection as defined by the following claims.

## Claims

1. Capsule (1) for preparing infused or soluble beverages, comprising:
- a cup (2) suitable to define an inner volume (V) for the containment of at least one substance to be infused or dissolved, said cup (2) being closed superiorly by a cover (6), said cup being provided with a bottom (3), provided with an opening (31) for the outflow of the infused beverage, and an inner base (33) provided with reliefs (310, 320, 330, 340, 350, 360) devoid of cutting or puncture elements;
- a disc (5) placed inside the cup (2), fixed at least partially on the reliefs (310, 320, 330, 340, 350, 360), and suitable to seal the capsule (1) inferiorly;
- a closed chamber (12), defined superiorly by the cover (6) and inferiorly by the disc (5), inside which is contained the substance to be infused or dissolved; **characterized in that** it comprises
- traction means of the disc (5) actuated by the increase in pressure inside the chamber (12),
and **in that** the opening of the capsule (1) for the outflow of the infused beverage is a result of the displacement of the disc (5) by the traction means, displacement that allows the opening of a passage (P) for the outflow the infused liquid without causing any rupture or tear of the disc (5) itself,
and **in that** the disc (5) is fixed to the base (33) in a manner at least partially releasable and the traction means are adapted to pull the disc (5) until causing the yielding of the fixing so as to reduce the sealing effect previously provided by the disc (5).

2. Capsule (1) according to claim 1, wherein the disc (5) is temporarily fixed by using a low-adhesion lacquer (89) or a low-adhesion adhesive.

3. Capsule (1) according to claim 1 or 2, wherein the traction means are realized in correspondence of the bottom (3) and comprise:
- a substantially rigid perimetral edge (81);
- a central portion (83) on which the pressure force acts from the inside of the chamber (12);
- an intermediate portion (82), interposed between the perimetral edge (81) and the central portion (83), collapsible towards the outside of the cup (2) under the action of the pressure exerted by the pressurized fluid on the central portion (83) and/or on this intermediate portion (82);
and wherein the collapse of the intermediate portion (82) determines a displacement of the central portion (83) and with it the disc (5).

4. Capsule (1) according to claim 3, wherein:
- the perimetral edge (81) corresponds, at least partially, to an outer edge (360) of the inner base (33);
- the central portion (83) corresponds, at least partially, to a labyrinth portion (30) of the inner base (33) on which the disc (5) is permanently fixed;
- the intermediate portion (82) corresponds, at least partially, to a compartment (351, 352) of the base (33).

5. Capsule (1) according to claim 3 or 4, wherein the intermediate portion (82) is connected perimetrally to the perimetral edge (81) through the interposition of at least one first fold line (84), and is connected to the central portion (83) through the interposition of at least one second fold line (85), and wherein the intermediate portion (82) is collapsible towards the outside of the volume of the cup (2) by rotating, in relation to the perimetral edge (81) and to the central portion (83), respectively around the first fold line (84) and to the second fold line (85).

6. Capsule (1) according to any of claims 3 to 5, wherein the traction means are snap-on and the capsule (1) is bistable, i.e., maintains the operative dispensing position.

7. Capsule (1) according to claim 6, wherein the fold lines (84, 85) are lines of narrowing or thinning of the material, or grooves, and the intermediate portion (82) is rigid to allow the snap opening.

8. Capsule (1) according to any of claims 3 to 5, wherein the traction means are elastic and the capsule (1) is monostable, i.e., once the pressure inside the chamber (12) ceases, or is reduced, it returns to the operative closure position.

9. Capsule (1) according to claim 8, wherein the intermediate portion (82) is flexible and concave towards the outside of the cup (2) in an operative closure position and convex towards the outside of the cup (2) in an operative dispensing position.

10. Capsule (1) according to claim 8 or 9, wherein the inner base (33) comprises a plurality of reliefs in the form of sectors (350), suitable to push the disc (5) towards the initial closure position to reclose the passage (P).

11. Capsule (1) according to any of the preceding claims, wherein the disc (5) is fixed in an at least partially releasable manner one an outer edge (360) of the base (33), and is permanently fixed on a labyrinth portion (30) of the base (33).

12. Capsule (1) according to any of claims 1 to 10, wherein the disc (5) is composed of an outer portion (51) and an inner portion (52), joined to each other in a manner at least partially releasable, and wherein the outer portion (51) is permanently fixed on an outer edge (360) of the base (33), and the inner portion (52) is permanently fixed on a labyrinth portion (30) of the base (33) .

13. Capsule (1) according to any of the preceding claims, wherein the disc (5) is a resistant film, which does not break or tear due to the increase of the pressure inside the capsule (1), made of plastic material with a thickness between 50µ and 80µ, preferably between 60µ and 70µ.

14. Method of preparing an infused beverage from a capsule (1), according to claim 1, wherein a pressurized fluid is inserted, **characterized in that**, when the pressure exerted by the fluid inside a closed chamber (12) reaches a certain threshold level, the opening of the capsule (1) for the outflow of the infused beverage is obtained by the displacement of the disc (5) by the traction means actuated by the pressure, displacement that allows the opening of a passage (P) for the outflow of the infused liquid without causing any rupture or tearing of the disc (5) itself, and **in that** the disc (5) is fixed to the base (33) in a manner at least partially releasable and the traction means are adapted to pull the disc (5) until causing the yielding of the fixing so as to reduce the sealing effect previously provided by the disc (5).

15. Method according to claim 14, wherein the disc (5) is temporarily fixed by using a low-adhesion lacquer (89) or a low-adhesion adhesive.

## Patentansprüche

1. Kapsel (1) zum Zubereiten von aufgegossenen oder löslichen Getränken, umfassend:
- einen Becher (2), der geeignet ist, ein Innenvolumen (V) für die Aufnahme von zumindest einer aufzugießenden oder zu lösenden Substanz zu definieren, wobei der Becher (2) oben durch einen Deckel (6) verschlossen ist, wobei der Becher mit einem Boden (3), der mit einer Öffnung (31) für den Ausfluss des aufgegossenen Getränks versehen ist, und einer inneren Basis (33) versehen ist, die mit Reliefs (310, 320, 330, 340, 350, 360) ohne Schneid- oder Lochelemente versehen ist;
- eine Scheibe (5), die in dem Becher (2) platziert ist, zumindest teilweise an den Reliefs (310, 320, 330, 340, 350, 360) befestigt ist und geeignet ist, die Kapsel (1) von unten abzudichten;
- eine geschlossene Kammer (12), die oben durch den Deckel (6) und unten durch die Scheibe (5) definiert ist, in der sich die aufzugießende oder zu lösende Substanz befindet;
**dadurch gekennzeichnet, dass** sie umfasst
- Zugmittel der Scheibe (5), die durch den Druckanstieg innerhalb der Kammer (12) betätigt werden,
und dadurch, dass das Öffnung der Kapsel (1) für den Ausfluss des aufgegossenen Getränks ein Ergebnis der Verlagerung der Scheibe (5) durch die Zugmittel ist, wobei die Verlagerung, die das Öffnen eines Durchgangs (P) für den Ausfluss der aufgegossenen Flüssigkeit ermöglicht, kein Brechen oder Reißen der Scheibe (5) selbst bewirkt,
und dadurch, dass die Scheibe (5) an der Basis (33) auf zumindest teilweise lösbare Weise befestigt ist und die Zugmittel angepasst sind, die Scheibe (5) zu ziehen, bis die Nachgiebigkeit der Befestigung bewirkt wird, um den Dichtungseffekt zu verringern, der zuvor von der Scheibe (5) bereitgestellt wurde.

2. Kapsel (1) nach Anspruch 1, wobei die Scheibe (5) temporär unter Verwendung eines Lacks mit geringer Adhäsion (89) oder eines Haftmittels mit geringer Adhäsion befestigt ist.

3. Kapsel (1) nach Anspruch 1 oder 2, wobei die Zugmittel in Entsprechung mit dem Boden (3) realisiert sind und umfassen:
- eine im Wesentlichen starre Umfangskante (81);
- einen zentralen Abschnitt (83), auf den die Druckkraft von der Innenseite der Kammer (12) wirkt;
- einen Zwischenabschnitt (82), angeordnet zwischen der Umfangskante (81) und dem zentralen Abschnitt (83), der zu der Außenseite des Bechers (2) unter Einwirkung des Drucks, der von der unter Druck stehenden Flüssigkeit auf den zentralen Abschnitt (83) und/oder auf diesem Zwischenabschnitt (82) ausgeübt wird, zusammenklappbar bzw. -faltbar ist;
und wobei das Zusammenfalten des Zwischenabschnitts (82) eine Verlagerung des zentralen Abschnitts (83) und damit der Scheibe (5) bestimmt.

4. Kapsel (1) nach Anspruch 3, wobei:
- die Umfangskante (81) zumindest teilweise einer Außenkante (360) der inneren Basis (33) entspricht;
- der zentrale Abschnitt (83) zumindest teilweise einem Labyrinthabschnitt (30) der inneren Basis (33) entspricht, an dem die Scheibe (5) permanent befestigt ist;
- der Zwischenabschnitt (82) zumindest teilweise einem Fach (351, 352) der Basis (33) entspricht.

5. Kapsel (1) nach Anspruch 3 oder 4, wobei der Zwischenabschnitt (82) durch Zwischenanordnung zumindest einer ersten Falzlinie (84) perimetral mit der Umfangskante (81) verbunden ist und mit dem zentralen Abschnitt (83) durch Zwischenanordnung zumindest einer zweiten Falzlinie (85) verbunden ist, und wobei der Zwischenabschnitt (82) zu der Außenseite des Volumens des Bechers (2) hin durch Drehen, in Bezug auf die Umfangskante (2) und den zentralen Abschnitt (83), jeweils um die erste Falzlinie (84) und zu der zweiten Falzlinie (85) zusammenfaltbar ist.

6. Kapsel (1) nach einem der Ansprüche 3 bis 5, wobei die Zugmittel Snap-On bzw. vom Schnapptyp sind und die Kapsel (1) bistabil ist, d. h. die operative Abgabeposition beibehält.

7. Kapsel (1) nach Anspruch 6, wobei die Falzlinien (84, 85) Linien der Verengung oder Ausdünnung des Materials oder Rillen sind und der Zwischenabschnitt (82) starr ist, um die Schnappöffnen zu erlauben.

8. Kapsel (1) nach einem der Ansprüche 3 bis 5, wobei die Zugmittel elastisch sind und die Kapsel (1) monostabil ist, d. h. sobald der Druck in der Kammer (12) aufhört oder verringert wird, kehrt sie in die operative Verschlussposition zurück.

9. Kapsel (1) nach Anspruch 8, wobei der Zwischenabschnitt (82) in einer operativen Verschlussposition flexibel und konkav zu der Außenseite des Bechers (2) ist und in einer operativen Abgabeposition konvex zu der Außenseite des Bechers (2) ist.

10. Kapsel (1) nach Anspruch 8 oder 9, wobei die innere Basis (33) ein Mehrzahl von Reliefs in Form von Sektoren (350) umfasst, die geeignet sind, die Scheibe (5) zu der anfänglichen Verschlussposition zu drücken, um den Durchgang (P) wieder zu verschließen.

11. Kapsel (1) nach einem der vorhergehenden Ansprüche, wobei die Scheibe (5) auf zumindest teilweise lösbare Weise an einer Außenkante (360) der Basis (33) befestigt ist und permanent an einem Labyrinthabschnitt (30) der Basis (33) befestigt ist.

12. Kapsel (1) nach einem der Ansprüche 1 bis 10, wobei die Scheibe (5) aus einem äußeren Abschnitt (51) und einem inneren Abschnitt (52) besteht, die auf zumindest teilweise lösbare Weise miteinander verbunden sind, und wobei der äußere Abschnitt (51) permanent an einer Außenkante (360) der Basis (33) befestigt ist und der innere Abschnitt (52) permanent an einem Labyrinthabschnitt (30) der Basis (33) befestigt ist.

13. Kapsel (1) nach einem der vorhergehenden Ansprüche, wobei die Scheibe (5) ein widerstandsfähiger Film ist, der nicht aufgrund des Druckanstiegs im Inneren der Kapsel (1) bricht oder reißt, hergestellt aus Kunststoffmaterial mit einer Dicke zwischen 50µ und 80µ, vorzugsweise zwischen 60µ und 70µ.

14. Verfahren zum Zubereiten eines aufgegossenen Getränks aus einer Kapsel (1) nach Anspruch 1, wobei eine unter Druck stehende Flüssigkeit eingebracht wird, **dadurch gekennzeichnet, dass**, wenn der von der Flüssigkeit im Inneren einer geschlossenen Kammer (12) ausgeübte Druck einen bestimmten Schwellenwert erreicht, das Öffnen der Kapsel (1) für den Ausfluss des aufgegossenen Getränks durch die Verlagerung der Scheibe (5) durch die Zugmittel, die durch den Druck betätigt werden, erreicht wird, wobei die Verlagerung, die das Öffnen eines Durchgangs (P) für den Ausfluss der aufgegossenen Flüssigkeit ermöglicht, kein Brechen oder Reißen der Scheibe (5) selbst bewirkt, und dadurch, dass die Scheibe (5) an der Basis (33) auf zumindest teilweise lösbare Weise befestigt wird und die Zugmittel angepasst sind, die Scheibe (5) zu ziehen, bis die Nachgiebigkeit der Befestigung bewirkt wird, um den Dichtungseffekt zu verringern, der zuvor von der Scheibe (5) bereitgestellt wurde.

15. Verfahren nach Anspruch 14, wobei die Scheibe (5) temporär unter Verwendung eines Lacks mit geringer Adhäsion (89) oder eines Haftmittels mit geringer Adhäsion befestigt wird.

## Revendications

1. Capsule (1) pour la préparation de boissons infusées ou solubles, comprenant :
- un gobelet (2) adapté pour définir un volume intérieur (V) pour la contenance d'au moins une substance à infuser ou à dissoudre, ledit gobelet (2) étant fermé sur le dessus par un couvercle (6), ledit gobelet étant doté d'un fond (3), doté d'une ouverture (31) pour le flux de sortie de la boisson infusée, et d'une base intérieure (33) dotée de reliefs (310, 320, 330, 340, 350, 360) dépourvus d'éléments de coupe ou de perforation ;
- un disque (5) placé à l'intérieur du gobelet (2), fixé au moins partiellement sur les reliefs (310, 320, 330, 340, 350, 360), et adapté pour sceller la capsule (1) sur le dessous ;
- une chambre fermée (12), définie sur le dessus par le couvercle (6) et sur le dessous par le disque (5), à l'intérieur de laquelle est contenue la substance à infuser ou dissoudre ;
**caractérisée en ce qu'**elle comprend
- des moyens de traction du disque (5) actionné par l'augmentation de pression à l'intérieur de la chambre (12),
et **en ce que** l'ouverture de la capsule (1) pour le flux de sortie de la boisson infusée est un résultat du déplacement du disque (5) par les moyens de traction, déplacement qui permet l'ouverture d'un passage (P) pour le flux de sortie du liquide infusé sans causer de rupture ni de déchirure du disque (5) lui-même,
et **en ce que** le disque (5) est fixé à la base (33) d'une manière au moins partiellement libérable et les moyens de traction sont adaptés pour tirer le disque (5) jusqu'à causer le fléchissement de la fixation de sorte à réduire l'effet de scellage précédemment fourni par le disque (5).

2. Capsule (1) selon la revendication 1, dans laquelle le disque (5) est temporairement fixé par utilisation d'un vernis à faible adhérence (89) ou un adhésif à faible adhérence.

3. Capsule (1) selon la revendication 1 ou 2, dans laquelle les moyens de traction sont réalisés de manière à correspondre au fond (3) et comprennent :
- une arête périmétrique sensiblement rigide (81) ;
- une portion centrale (83) sur laquelle la force de pression agit depuis l'intérieur de la chambre (12) ;
- une portion intermédiaire (82), interposée entre l'arête périmétrique (81) et la portion centrale (83), pliable vers le côté extérieur du gobelet (2) sous l'action de la pression exercée par le fluide pressurisé sur la portion centrale (83) et/ou sur cette portion intermédiaire (82) ;
et dans laquelle l'effondrement de la portion intermédiaire (82) détermine un déplacement de la portion centrale (83) et avec elle du disque (5).

4. Capsule (1) selon la revendication 3, dans laquelle :
- l'arête périmétrique (81) correspond, au moins partiellement, à une arête extérieure (360) de la base intérieure (33) ;
- la portion centrale (83) correspond, au moins partiellement, à une portion de labyrinthe (30) de la base intérieure (33) sur laquelle le disque (5) est fixé en permanence ;
- la portion intermédiaire (82) correspond, au moins partiellement, à un compartiment (351, 352) de la base (33).

5. Capsule (1) selon la revendication 3 ou 4, dans laquelle la portion intermédiaire (82) est raccordée de manière périmétrique à l'arête périmétrique (81) à travers l'interposition d'au moins une première ligne de pliage (84), et est raccordée à la portion centrale (83) à travers l'interposition d'au moins une seconde ligne de pliage (85), et dans laquelle la portion intermédiaire (82) est pliable vers le côté extérieur du volume du gobelet (2) par rotation, en relation avec l'arête périmétrique (81) et avec la portion centrale (83), respectivement autour de la première ligne de pliage (84) et avec la seconde ligne de pliage (85).

6. Capsule (1) selon l'une quelconque des revendications 3 à 5, dans laquelle les moyens de traction sont verrouillés par ressort et la capsule (1) est bistable, c'est-à-dire, maintient la position de distribution opérationnelle.

7. Capsule (1) selon la revendication 6, dans laquelle les lignes de pliage (84, 85) sont des lignes de rétrécissement ou d'amincissement du matériau, ou des rainures, et la portion intermédiaire (82) est rigide pour permettre l'ouverture rapide.

8. Capsule (1) selon l'une quelconque des revendications 3 à 5, dans laquelle les moyens de traction sont élastiques et la capsule (1) est monostable, c'est-à-dire, une fois que la pression à l'intérieur de la chambre (12) cesse, ou est réduite, elle revient à la position de fermeture opérationnelle.

9. Capsule (1) selon la revendication 8, dans laquelle la portion intermédiaire (82) est flexible et concave vers le côté extérieur du gobelet (2) dans une position de fermeture opérationnelle et convexe vers le côté extérieur du gobelet (2) dans une position de distribution opérationnelle.

10. Capsule (1) selon la revendication 8 ou 9, dans laquelle la base intérieure (33) comprend une pluralité de reliefs sous la forme de secteurs (350), adaptés pour pousser le disque (5) vers la position de fermeture initiale pour refermer le passage (P).

11. Capsule (1) selon l'une quelconque des revendications précédentes, dans laquelle le disque (5) est fixé d'une manière libérable au moins partiellement sur une arête extérieure (360) de la base (33), et est fixé en permanence sur une portion de labyrinthe (30) de la base (33).

12. Capsule (1) selon l'une quelconque des revendications 1 à 10, dans laquelle le disque (5) est composé d'une portion extérieure (51) et d'une portion intérieure (52), jointes l'une à l'autre d'une manière au moins partiellement libérable, et dans laquelle la portion extérieure (51) est fixée en permanence sur une arête extérieure (360) de la base (33), et la portion intérieure (52) est fixée en permanence sur une portion de labyrinthe (30) de la base (33).

13. Capsule (1) selon l'une quelconque des revendications précédentes, dans laquelle le disque (5) est un film résistant, qui ne rompt ni ne se déchire pas en raison de l'augmentation de la pression à l'intérieur de la capsule (1), réalisée en matière plastique avec une épaisseur entre 50 µ et 80 µ, de préférence entre 60 µ et 70 µ.

14. Procédé de préparation d'une boisson infusée à partir d'une capsule (1) selon la revendication 1, dans lequel un fluide pressurisé est inséré, **caractérisé en ce que**, lorsque la pression exercée par le fluide à l'intérieur d'une chambre fermée (12) atteint un certain niveau seuil, l'ouverture de la capsule (1) pour le flux de sortie de la boisson infusée est obtenue par le déplacement du disque (5) par les moyens de traction actionnés par la pression, déplacement qui permet l'ouverture d'un passage (P) pour le flux de sortie du liquide infusé sans causer de rupture ni de déchirure du disque (5) lui-même, et **en ce que** le disque (5) est fixé à la base (33) d'une manière au moins partiellement libérable et les moyens de traction sont adaptés pour tirer le disque (5) jusqu'à causer le fléchissement de la fixation de sorte à réduire l'effet de scellage précédemment fourni par le disque (5).

15. Procédé selon la revendication 14, dans lequel le disque (5) est temporairement fixé par utilisation d'un vernis (89) à faible adhérence ou un adhésif à faible adhérence.
